Europäisches Patentamt

European Patent Office

Office européen des brevets

(19)

(11) Veröffentlichungsnummer : **0 075 779**
**B1**

(12) EUROPÄISCHE PATENTSCHRIFT

(45) Veröffentlichungstag der Patentschrift :
03.04.85

(51) Int. Cl.⁴ : **G 01 L   5/28, G 01 D   5/20**

(21) Anmeldenummer : **82108454.8**

(22) Anmeldetag : **14.09.82**

(54) Bremsenprüfstand.

(30) Priorität : 28.09.81 DE 3138538

(43) Veröffentlichungstag der Anmeldung :
06.04.83 Patentblatt 83/14

(45) Bekanntmachung des Hinweises auf die Patenterteilung : 03.04.85 Patentblatt 85/14

(84) Benannte Vertragsstaaten :
CH DE FR GB LI SE

(56) Entgegenhaltungen :
DE-A- 2 840 688
DE-A- 2 918 961
DE-B- 2 352 851
DE-U- 7 723 320
FR-A- 2 315 087

(73) Patentinhaber : **ROBERT BOSCH GMBH**
**Postfach 50**
**D-7000 Stuttgart 1 (DE)**

(72) Erfinder : **Adolph, Dietrich**
**Im Wetterkreuz 12**
**D-7321 Albershausen (DE)**
Erfinder : **Dennenmann, Artur**
**Panoramastrasse 66**
**D-7320 Göppingen (DE)**
Erfinder : **Schneider, Richard**
**Lindenweg 27**
**D-7901 Weidenstetten (DE)**

## Beschreibung

### Stand der Technik

Die Erfindung geht aus von einem Bremsenprüfstand nach der Gattung des unabhängigen Anpruchs. Beispielsweise aus dem DE-U-77 23 320 ist es bekannt, bei Bremsprüfgeräten das Bremsmoment elektrisch zu messen. Am Hebelarm sind hierzu an einer geeigneten Stelle Dehnungsmeßstreifen angebracht, deren Verformung ein Maß für das Bremsmoment ist. Eine solche Anordnung ist nachteilig, da genaue Dehnungsmeßstreifen sehr teuer sind. Weiterhin sind solche Anordnungen empfindlich für Querkräfte oder Verdrehungskräfte, die am Hebelarm angreifen können. Solche Kräfte führen dann zu einer Verfälschung des Meßwertes. Als weiterer Nachteil ist anzusehen, daß Dehnmeßstreifen, die auf dem Momentenhebel aufgebracht sind, nicht austauschbar sind, um beispielsweise den Bremsenprüfstand für andere Meßbereiche vorzusehen.

Üblich ist es auch, das Bremsmoment hydraulisch zu messen. Das auf den Hebelarm wirkende Moment wird durch ein Druckmanometer zur Anzeige gebracht. Eine solche Anzeige ist jedoch für die elektronische Weiterverarbeitung des Meßsignals nicht geeignet.

### Vorteile der Erfindung

Die erfindungsgemäße Vorrichtung mit den kennzeichnenden Merkmalen des unabhängigen Anspruchs hat demgegenüber den Vorteil, daß die Messung berührungslos erfolgt und für die weitere Verarbeitung in Recheneinrichtungen bereits digital vorliegt. Als weiterer Vorteil ist anzusehen, daß durch die Ausbildung des Kurzschlußringes als Rohr die Messung verdrehungsunempfindlich und durch die Linearführung seitenkraftunempfindlich erfolgt. Es sind daher genaue, unverfälschte Meßwerte des Bremsmomentes zu erhaten, die leicht weiterverarbeitbar sind. Weiterhin ist es durch entsprechende Wahl der Feder leicht möglich, eine Anpassung an andere Meßbereiche zu erzielen.

Durch die in den abhängigen Ansprüchen aufgeführten Maßnahmen sind vorteilhafte Weiterbildungen und Verbesserungen der im unabhängigen Anspruch angegebenen Vorrichtung möglich. Vorteilhaft ist es, die Feder als Rundfeder auszubilden, die einerseits am Gehäuse des Gebers, andererseits am Stützbolzen für den Hebelarm abgestützt ist. Hierdurch läßt sich eine besonders einfache und günstige Ausgestaltung der Meßvorrichtung erreichen, wobei gleichzeitig das innen liegende Rohr vor Beschädigungen geschützt ist. Weiterhin ist es günstig, einen Faltenbalg zwischen Gehäuse und Stützbolzen anzubringen, um die Meßvorrichtung vor Staub und Schmutz zu schützen. Schließlich ist es günstig, das verschiebbare Kurzschlußrohr nur im Bereich der Aufnehmerspule als Kurzschlußrohr auszubilden, wobei dem Kurzschlußrohr ein Kernstück folgt, auf dem der Stützbolzen befestigt ist. Hierdurch wird die Meßvorrichtung besonders stabil und unempfindlich, da das Rohr im inneren Bereich durch äußere Kräfte nicht beschädigbar ist.

### Zeichnung

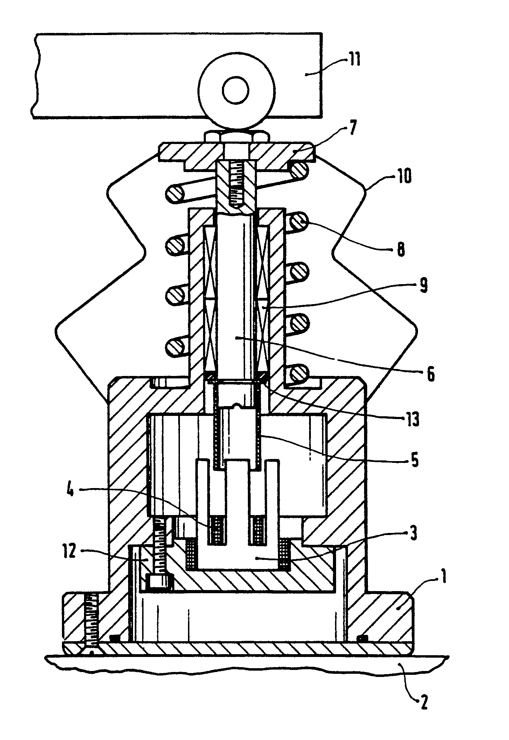

Ein Ausführungsbeispiel der Erfindung ist in der Zeichnung dargestellt und in der nachfolgenden Beschreibung näher erläutert.

### Beschreibung des Ausführungsbeispiels

Die Figu. zeigt eine Meßvorrichtung, di ur Messung des Bremsmomentes eines Bremsenprüfstandes dient. Auf einem Prüfstandrahmen 2 ist ein Gehäuse 1 befestigt. Das Gehäuse 1 dient zum Schutz der Meßeinrichtung vor äußeren Beschädigungen. Auf einer Halterung 12, die mit dem Gehäuse verbunden ist, ist ein dreischenkliger Kern 3 aufgebracht, dessen Mittelschenkel eine Spule 4 trägt. In den Mittelschenkel des Kernes 3 ragt ein Kurzschlußrohr 5. An das Kurzschlußrohr angeflanscht ist ein Kernstück 6, das aus Vollmaterial hergestellt ist. Das Kernstück 6 ist in Linearlagern 9 gelagert, so daß das Kurzschlußrohr mit dem Kernstück nur in vertikaler Richtung bewegbar ist. Eine kreisförmige Nase 13 bewirkt, daß das Kurzschlußrohr 5 nicht in den Bereich der Linearlager 9 gelangen kann. Dem Kernstück 6 folgt ein Stützbolzen 7. Der Stützbolzen 7 und das Gehäuse 1 weisen jeweils Nuten auf, in die eine Rundfeder 8 eingesetzt ist. Der Stützbolzen 7 ist mit dem Kernstück 6 durch eine Schraube befestigt. Auf den Stützbolzen 7 wirkt ein ausschnittsweise dargestellter Bremsmomenthebel 11 eines nicht dargestellten Bremsenprüfstandes ein. Ein Faltenbalg 10 schützt die Feder 8 und die Lager 9 vor Verschmutzung und erstreckt sich vom Stützbolzen 7 bis zum Gehäuse 1.

Die Wirkung eines Kurzschlußringgebers ist beispielsweise aus der DE-A-23 52 851 bekannt, so daß sich eine Beschreibung des Kurzschlußringgebers erübrigt. Wird nun bei einem Bremsvorgang ein Drehmoment auf den Drehmomenthebel 11 ausgeübt, so drückt der Drehmomenthebel 11 gegen die Federkraft der Feder 8 den Stützbolzen 7 nach unten. Dadurch taucht das Kurzschlußrohr 5 tiefer in den Mittelschenkel des Spulenkerns 3 ei. vas eine Induktivitätsänderung bewirkt, die Maß für das Bremsmoment ist. Das darge e Ausführungsbeispiel ist durch die Einfüg. j des Kernstücks 6 besonders robust ausgelegt. Bei einfacheren Ausführungen ist das Kurzschlußrohr über das Lager hinaus verlängerbar, so daß es direkt mit einem Stützbolzen 7 abschließbar ist. Auch die Qualität der Lager ist je nach erforderlichen Ansprüchen Ver-

änderbar. Mittels einer Justierschraube in der Halterung 12 ist es möglich, die Spule in bezug zum Kurzschlußkern zu justieren. Durch die Linearführung mit den Linearlagern 9 können Querkräfte keinen Einfluß auf das Meßergebnis ausüben. Da weiterhin der Kurzschlußring als Kurzschlußrohr 5 ausgebildet ist, ist die Meßvorrichtung verdrehunempfindlich. Das Meßprinzip ist berührungslos, da zwischen Bremsmomenthebel 11 und der Spule als Meßwertaufnehmer keine direkten Verbindungen bestehen. Durch geeignete Wahl der Feder 8 sind verschiedene Meßbereiche leicht vorwählbar. Eine Änderung des Meßbereiches erfolgt einfach dadurch, daß der Stützbolzen 7 entfernt wird und eine neue Feder mit anderer Federsteifigkeit eingesetzt wird. Bildet die Spule 4 die Induktivität eines Oszillators, so ist das Meßergebnis in digitaler Form zu erhalten, so daß es besonders leicht in rechnergesteuerten Rollenbremsprüfständen einsetzbar ist.

**Ansprüche**

1. Bremsprüfstand für Fahrzeuge mit pendelnd gelagerten Rollen, auf denen die Räder einer Achse des zu prüfenden Fahrzeuges rollen, und mit einem an der Rolle befestigten Hebelarm (11), durch den das beim Bremsen auftretende Bremsmoment auf eine Meßvorrichtung übertragen wird, dadurch gekennzeichnet, daß als Meßvorrichtung ein Kurzschlußring-Weggeber Verwendung findet, der eine Feder (8) zur Erzeugung der Gegenkraft aufweist und dessen Kurschlußring als Rohr (5) ausgebildet ist, das in Linearlagern (9) gelagert ist, und daß der Hebelarm (11) auf das Kurzschlußrohr (5) einwirkt.

2. Vorrichtung nach Anspruch 1, dadurch gekennzeichnet, daß die Feder (8) als Rundfeder ausgebildet ist, die einerseits an einem Gehäuse (1), andererseits an einem Stützbolzen (7) des Kurzschlußrohres (5) abgestützt ist.

3. Vorrichtung nach Anspruch 1 oder 2, dadurch gekennzeichnet, daß ein Faltenbalg (10) zwischen Gehäuse (1) und Stützbolzen (7) angebracht ist.

4. Vorrichtung nach einem der Ansprüche 1 bis 3, dadurch gekennzeichnet, daß dem Kurzschlußrohr (5) ein Kernstück (6) folgt, auf dem der Stützbolzen (7) befestigt ist.

**Claims**

1. Brake test stand for vehicles, with pendulum-mounted rollers on which the wheels of an axle of the vehicle to be tested roll, and with a lever arm (11) which is fastened to the roller and by means of which the brake torque occuring during braking is transmitted to a measuring device, characterised in that the measuring device used is a short-circuit ring displacement sensor which has a spring (8) for generating the counterforce and the short-circuit ring of which is designed as a tube (5) mounted in linear bearings (9), and in that the lever arm (11) acts on the short-circuit tube (5).

2. Device according to Claim 1, characterised in that the spring (8) is designed as a round spring which is supported on the one hand on a housing (1) and on the other hand on a supporting pin (7) of the short-circuit tube (5).

3. Device according to Claim 1 or 2, characterised in that a bellows (10) is provided between the housing (1) and supporting pin (7).

4. Device according to one of Claims 1 to 3, characterised in that a core piece (6) on which the suppporting pin (7) is fastened follows the short-circuit tube (5).

**Revendications**

1. Appareil de vérification de freinage pour véhicules automobiles, avec rouleaux montés oscillants, sur lesquels roulent les roues d'un essieu du véhicule à vérifier, et comprenant un bras de levier (11) fixé au rouleau et par lequel est transmis, à un dispositif de mesure, le moment de couple de freinage produit lors du freinage, appareil caractérisé en ce que, comme dispositif de mesure, est utilisé un indicateur de parcours à anneau de court-circuit, qui présente un ressort (8) pour la production d'une force opposée et dont l'anneau est constitué par un tuyau (5) supporté dans des paliers linéaires, le bras de levier (11) agissant sur ce tuyau de court-circuit (5).

2. Appareil suivant la revendication 1, caractérisé en ce que le ressort (8) est constitué par un ressort hélicoïdal à spires en acier rond qui est appuyé, d'un côté, contre un carter (1) et, de l'autre côté, contre un axe de support (7) du ressort de court-circuit (5).

3. Appareil suivant l'une des revendications 1 ou 2, caractérisé en ce qu'un soufflet à plis (10) est monté entre le carter (1) et l'axe de support (7) du ressort.

4. Appareil suivant l'une quelconque des revendications 1 à 3, caractérisé en ce que le tuyau de fermeture de circuit (5) est suivi par une pièce de noyau (6) sur laquelle est fixé l'axe (7) de support du ressort.